(19) Europäisches Patentamt
European Patent Office
Office européen des brevets

(11) **EP 2 743 637 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
**G01B 11/27** (2006.01)    **G06T 7/00** (2006.01)
**G01M 11/06** (2006.01)

(21) Anmeldenummer: **14159034.9**

(22) Anmeldetag: **21.11.2011**

(54) **Prüfvorrichtung für Scheinwerfer**

Test device for headlamps

Dispositif de vérification des phares

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2010 DE 102010062770**

(43) Veröffentlichungstag der Anmeldung:
**18.06.2014 Patentblatt 2014/25**

(62) Dokumentnummer(n) der früheren Anmeldung(en) nach Art. 76 EPÜ:
**11189902.7 / 2 463 620**

(73) Patentinhaber: **MAHA Maschinenbau Haldenwang GmbH & Co. KG**
**87490 Haldenwang (DE)**

(72) Erfinder: **Modlmeir, Peter**
**87488 Waltenhofen-Lanzen (DE)**

(74) Vertreter: **MERH-IP Matias Erny Reichl Hoffmann Patentanwälte PartG mbB**
**Paul-Heyse-Strasse 29**
**80336 München (DE)**

(56) Entgegenhaltungen:
DE-A1- 1 622 031    DE-A1- 2 239 959
DE-A1- 19 932 294    DE-A1- 19 941 034

**Beschreibung**

Die vorliegende Erfindung betrifft eine Vorrichtung zur Überprüfung von lichttechnischen Einrichtungen eines Kraftfahrzeugs. Vorteilhaft ermöglicht die Prüfvorrichtung, dass ein Lichtstrahlabbild einer zu prüfenden lichttechnischen Einrichtung auf einer Projektionsfläche automatisch basierend auf einem Ausrichtungswinkel $\alpha$ zwischen der Prüfvorrichtung und dem Kraftfahrzeug korrigiert wird. Der Ausrichtungswinkel $\alpha$ wird automatisch ermittelt. Somit wird die Durchführung der Überprüfung der lichttechnischen Einrichtung beschleunigt und deren Genauigkeit erhöht.

Lichttechnische Einrichtungen, z.B. Scheinwerfer, ermöglichen dem Fahrer eine gute Sicht und verhindern, dass andere Verkehrsteilnehmer das eigene Kraftfahrzeug übersehen bzw. nicht wahrnehmen können. Scheinwerfer können jedoch auch eine Unfallquelle darstellen. Dies kann dann der Fall sein, wenn die Scheinwerfer falsch eingestellt oder mangelhaft gewartet sind. Nicht einwandfrei eingestellte Scheinwerfer können z.B. Fahrer entgegenkommender Kraftfahrzeuge blenden und dadurch schwere Unfälle herbeiführen.

Dies kann durch ein regelmäßiges Überprüfen und Einstellen der lichttechnischen Einrichtungen des Kraftfahrzeuges verhindert werden. Dabei ist es wichtig, dass die Überprüfung und das Einstellen auf Basis objektiv ermittelter Messwerte erfolgen und präzise durchgeführt werden, da andernfalls eine fehlerhafte Einstellung nicht zuverlässig erkannt werden kann oder erst herbeigeführt wird.

In Werkstätten und Prüforganisationen werden zum Überprüfen und Einstellen von Scheinwerfern Lichteinstell- bzw. Scheinwerfereinstellgeräte verwendet. Das Lichteinstellgerät wird derart vor dem zu prüfenden Scheinwerfer eines Kraftfahrzeuges positioniert, dass das Licht des Kraftfahrzeugscheinwerfers ein Abbild innerhalb des Lichteinstellgerätes erzeugt. Basierend auf dem Lichtabbild wird dann beispielsweise die Einstellung der vertikalen und horizontalen Position des Scheinwerfers überprüft und gegebenenfalls neu eingestellt.

Für die Überprüfung/Einstellung ist es erforderlich, dass das Lichteinstellgerät bzw. dessen Prüfeinheit möglichst mittig vor dem zu prüfenden Scheinwerfer platziert wird und die Querachse des Fahrzeuges parallel zur Querachse der Prüfeinheit bzw. der Linse ausgerichtet wird. In anderen Worten bedeutet dies, dass bei korrekter Ausrichtung eine Längsachse des Kraftfahrzeuges mit einer Längsachse der Prüfeinheit übereinstimmt.

Bei einer nicht-parallelen Ausrichtung der Prüfvorrichtung wird das Lichtabbild des Scheinwerferstrahls verfälscht, was zu Messfehlern und somit zu falschen Prüfergebnissen bzw. Einstellergebnissen führen kann. Dies kann die Sicherheit im Straßenverkehr erheblich gefährden.

Bislang wird das Ausrichten der herkömmlichen Lichteinstellgeräte zum Kraftfahrzeug manuell mit diversen Hilfsmitteln durchgeführt. In der Regel visiert der Bediener z.B. die Vorderkante des zu prüfenden Kraftfahrzeuges an, indem er beispielsweise durch einen Schlitzkasten oder in einen Spiegel mit Strichmarkierungen an dem Lichteinstellgerät schaut und dabei dessen Prüfeinheit solange dreht bis eine parallele Ausrichtung zur anvisierten Vorderkante des Kraftfahrzeuges erreicht ist. Das gleiche Ausrichtungsprinzip wird auch mittels Lasern verfolgt, die einen Lichtstrich auf dem anvisierten Teil des Kraftfahrzeuges erzeugen und die Prüfeinheit entsprechend mit Hilfe des Laserstrichs manuell ausgerichtet wird.

Nachteilig ist dabei, dass das manuelle Ausrichten in höchstem Maße subjektiv ist und die Genauigkeit durch das Ausrichtehilfsmittel und den Bediener begrenzt wird. Der Zeitaufwand für ein im Rahmen der begrenzten Möglichkeiten genaues Ausrichten ist sehr hoch.

Die DE 199 32 294 A1 beschreibt ein Verfahren zur Einstellung eines Scheinwerfers an einem Fahrzeug, bei dem dieses auf einer Aufstellfläche vor einer Projektionsebene für eine Abbildung des Lichtkegels des einzustellenden Scheinwerfers aufgestellt wird.

Die DE 199 41 034 A1 beschreibt eine Einstellvorrichtung mit einem Einstellgerät für Scheinwerfer oder für einen Abstandssensor eines Fahrzeugs und mit einer optischen Justiereinrichtung zum Ausrichten des Einstellgeräts relativ zu dem Fahrzeug.

Es ist die Aufgabe der vorliegenden Erfindung, eine Vorrichtung zum objektiveren, präziseren und zeiteffektiveren Überprüfen und Einstellen einer lichttechnischen Einrichtung zu schaffen.

Die vorstehend beschriebene Aufgabe der vorliegenden Erfindung wird durch die Merkmale der unabhängigen Ansprüche gelöst.. Merkmale bevorzugter Weiterentwicklungen der vorliegenden Erfindung werden in den abhängigen Ansprüchen beschrieben.

Die vorliegende Erfindung betrifft eine Prüfvorrichtung, die zur Überprüfung lichttechnischer Einrichtungen eines Kraftfahrzeuges geeignet ist. Die Prüfvorrichtung hat eine Prüfeinheit, die zur Positionierung vor zumindest einer lichttechnischen Einrichtung entlang einer Verfahrachse verschiebbar ist. Das von der lichttechnischen Einrichtung abgestrahlte Licht wird mittels einer Linse auf einem Projektionsmittel abgebildet. Das Licht erzeugt auf dem Projektionsmittel ein Lichtabbild. Ferner weist die Prüfvorrichtung ein Datenerfassungsmittel zum Erfassen von Daten auf. Die Daten sind dazu geeignet, einen Ausrichtungswinkel $\alpha$ zwischen der Verfahrachse und einer Querachse des Kraftfahrzeuges zu ermitteln. Weiterhin weist die Prüfvorrichtung ein Datenverarbeitungsmittel auf. Das Datenverarbeitungsmittel ist zum Ermitteln des Ausrichtungswinkels $\alpha$ mittels der erfassten Daten und zum Korrigieren des Lichtabbildes basierend auf dem Ausrichtungswinkel $\alpha$ geeignet. Das Korrigieren erfolgt, wenn der Ausrichtungswinkel $\alpha$ größer ist ein vorbestimmter Winkel $\alpha_{Grenz}$. Die Überprüfung der lichttechnischen Einrichtung erfolgt basierend auf dem korrigierten Lichtabbild.

Ferner umfasst das Datenerfassungsmittel ein mit der Prüfeinheit in Verbindung stehendes Abstandsmessmittel zum Messen zumindest zweier Abstände oder ist ein solches. Das Abstandsmessmittel ist an der Prüfeinheit angeordnet. Die Abstände sind jeweils zwischen einem Messpunkt und einem Referenzpunkt des Kraftfahrzeuges angeordnet. Das Datenverarbeitungsmittel ermittelt mittels der zumindest zwei gemessenen Abstände den Ausrichtungswinkel α zwischen der Verfahrachse und einer Verbindungslinie. Die Verbindungslinie kann zumindest zwei Referenzpunkte verbinden.

Die Verbindungslinie ist bevorzugt eine Querachse des Kraftfahrzeuges oder eine Parallele dazu.

Vorteilhaft ist, dass das Abstandsmessmittel z.B. ein kostengünstiger Abstandssensor sein kann und dass die Ermittlung des Ausrichtungswinkels α basierend auf den gemessenen Abständen verglichen mit der Ermittlung mittels Bildbearbeitung relativ geringen Rechenaufwand erfordert. Jedoch muss die Prüfeinheit zum Ermitteln des Ausrichtungswinkels α entlang der Verfahrachse 13 vor dem Kraftfahrzeug verschoben werden.

Dies ist beim Ermitteln des Ausrichtungswinkels α mit dem Bilderfassungsmittel nicht notwendig.

Die lichttechnische Einrichtung ist unter anderem ein Scheinwerfer des Kraftfahrzeuges.

Das Projektionsmittel kann z.B. eine Fläche zum Abbilden des Lichtstrahls, ein Bildschirm, ein CCD-Sensor, aus mehreren CCD-Sensoren zusammengesetzt sein oder dergleichen. Bevorzugt kann das Lichtabbild des von der lichttechnischen Einrichtung auf das Projektionsmittel fallenden Lichtstrahls automatisch von dem Projektionsmittel erfasst und verarbeitet werden.

Der Ausrichtungswinkel α kann auch zwischen der Verfahrachse und einer Parallelen der Querachse des Kraftfahrzeuges angeordnet sein. Wenn die Verfahrachse der Prüfeinheit und die Querachse bzw. die Mittelebene der Linse nicht übereinstimmen, so kann der Winkel α auch zwischen der Querachse der Linse und der Querachse des Kraftfahrzeuges ermittelt werden.

Der vorbestimmte Winkel α_Grenz kann 0° sein. Bevorzugt wird das Korrigieren durchgeführt, wenn der Ausrichtungswinkel α größer als der Betrag des vorbestimmten Winkels α_Grenz ist.

Somit kann die Überprüfung der lichttechnischen Einrichtung des Kraftfahrzeuges zeiteffektiver durchgeführt werden, da ein zeitaufwendiges Ausrichten der Prüfeinheit vor dem Kraftfahrzeug entfallen kann. Ferner werden die Prüfergebnisse objektiver, d.h. sie sind nicht mehr von der Genauigkeit des Ausrichtens der Prüfeinheit, z.B. durch einen Bediener, abhängig. Durch die automatische Korrektur des Ausrichtungswinkels α werden die Ergebnisse genauer.

Der Abstand kann entlang einer geraden Strecke zwischen einem Messpunkt und einem Referenzpunkt messbar sein.

Ferner kann ein erster Abstand entlang einer ersten geraden Strecke zwischen einem ersten Messpunkt und einem ersten Referenzpunkt gemessen werden. Ein zweiter Abstand kann entlang einer zweiten geraden Strecke zwischen einem zweiten Messpunkt und einem zweiten Referenzpunkt gemessen werden. Die erste gerade Strecke und die zweite gerade Strecke können beabstandet und parallel zueinander angeordnet sein.

Ferner können die zumindest zwei Referenzpunkte paarweise symmetrisch rechts und links zur Mittellängsachse des Kraftfahrzeuges angeordnet sein. Die zumindest zwei Referenzpunkte können auf gleicher Höhe, d.h. über einem (Werkstatt-)Boden, des Kraftfahrzeuges angeordnet sein.

Dabei bedeutet paarweise symmetrisch, dass ein erster Referenzpunkt, der z.B. links der Symmetrieachse angeordnet ist, einem zweiten Referenzpunkt auf der rechten Seite der Symmetrieachse zugeordnet ist. Bei mehr als zwei Referenzpunkten ist bevorzugt eine geradzahlige Anzahl Referenzpunkte gegeben, so dass sich jeweils Referenzpunktpaare ergeben, die symmetrisch rechts und links der Symmetrieachse angeordnet sind.

Die obigen Weiterentwicklungen ermöglichen, dass das automatische Korrigieren eines Ausrichtungswinkels α sehr präzise mit wenigen Rechenoperationen durchgeführt werden kann und das Prüfergebnis sehr genau wird.

Ferner kann die Prüfvorrichtung eine Wegmesseinrichtung, die eine kürzeste Wegstrecke zwischen den zumindest zwei Messpunkten entlang der Verfahrachse der Prüfeinheit erfassen kann, aufweisen.

Die Wegmesseinrichtung kann beispielsweise Wegmarkierungen an einer Führungsschiene der Prüfvorrichtung auslesen, z.B. optisch oder magnetisch, oder die Wegmesseinrichtung kann ein Reibrad aufweisen, dessen Anzahl Umdrehungen beim Verfahren der Prüfeinheit erfasst und in einen Weg umgerechnet werden können.

Bei Verwendung der Wegmesseinrichtung kann ein weiterer Arbeitsschritt, der des Definierens oder Messens der Wegstrecke zwischen den Messpunkten, entfallen und die Prüfung somit noch zeiteffektiver und automatisierter durchgeführt werden.

Ferner kann die Prüfvorrichtung mittels einer Verfahreinrichtung selbstständig auf eine Zielposition verfahren. Die Verfahreinrichtung kann Steuerroutinen, die in dem Datenverarbeitungsmittel angeordnet sein können, einen Motor, der zumindest ein Rad antreiben kann, und/oder Sensoren umfassen.

Somit kann die Prüfeinheit selbsttätig verfahren und die Prüfung höchstmöglich automatisiert ausgeführt werden.

Die Prüfvorrichtung kann ein Führungsmittel aufweisen, das die Prüfeinheit horizontal verfahrbar führen kann.

Das Führungsmittel kann beispielsweise eine Schiene sein, auf der die Prüfeinheit verfahren kann, beispielsweise indem die Räder bzw. Rollen der Prüfeinheit in Eingriff mit der Schiene stehen können und darin horizontal geführt verfahrbar sein können. Die Prüfeinheit kann auch ohne Räder ausgeführt sein. Dann kann z.B. eine gleitende Lagerung der Prüfeinheit auf dem Führungsmittel ausgeführt sein.

Ein Vorteil bezüglich des Führungsmittels ist, dass das Verfahren der Prüfeinheit geführt und somit reproduzierbar und genau entlang der Verfahrachse der Prüfeinheit erfolgen kann. Somit wird eine sehr genaue Prüfung ermöglicht.

Ferner kann das Führungsmittel höhenverstellbare Beine und/oder Neigungserfassungsmittel aufweisen.

Die Neigungserfassungsmittel können z.B. Neigungssensoren sein, die elektronisch oder von einem Bediener auslesbar sein können.

Mittels der Neigungserfassungsmittel kann eine genaue horizontale Ausrichtung der Führungsmittel gewährleistet werden. Dadurch können Messfehler durch ein nicht horizontal ausgerichtetes Führungsmittel vermieden werden. Wird eine Neigung, d.h. Abweichung der Führungsmittel von der Horizontalen, ermittelt, können die höhenverstellbare Beine an den Führungsmitteln vorgesehen sein, die eine Justierung ermöglichen, z.B. elektronisch oder mechanisch manuell.

Ferner kann, wenn das Neigungserfassungsmittel eine Abweichung des Führungsmittels von der Horizontalen erfasst, ein Hinweismittel eine Warnung ausgeben oder das Führungsmittel kann automatisch die Neigung ausgleichen bzw. justiert werden.

Dadurch kann eine weitere Erhöhung der Prüfgenauigkeit der Prüfvorrichtung erreicht werden, da auch Prüfungenauigkeiten automatisch korrigiert werden können, die aus einer nicht horizontal gelagerten Prüfeinheit resultieren. Eine horizontale Neigung kann beispielsweise automatisch herausgerechnet werden oder durch ein automatisches Anpassen der Höhe der höhenverstellbaren Beine justiert werden.

Ferner betrifft die Erfindung ein Verfahren mit dem eine Überprüfung und/oder ein Einstellen einer lichttechnischen Einrichtung eines Kraftfahrzeuges mit einer erfindungsgemäßen Prüfvorrichtung durchführbar ist: Dabei wird die Prüfeinheit vor der lichttechnischen Einrichtung des Kraftfahrzeuges positioniert. Das Datenerfassungsmittel erfasst Daten, die dazu geeignet sind, den Ausrichtungswinkel $\alpha$ zu ermitteln. Das Datenverarbeitungsmittel ermittelt den Ausrichtungswinkel $\alpha$ mittels der erfassten Daten. Ferner korrigiert das Datenverarbeitungsmittel das Lichtabbild basierend auf dem Ausrichtungswinkel $\alpha$. Die Korrektur des Lichtbildes erfolgt, wenn der Ausrichtungswinkel $\alpha$ größer ist als der Betrag des vorbestimmten Winkels $\alpha_{Grenz}$. Weiterhin erfolgt die Überprüfung der lichttechnischen Einrichtung basierend auf dem korrigierten Lichtabbild.

Weiterhin wird die Prüfeinheit zur Ermittlung des Ausrichtungswinkels $\alpha$ vor dem Kraftfahrzeug entlang der Verfahrachse verfahren. Das Abstandsmessmittel misst dabei zumindest zwei Abstände, jeweils zwischen einem Messpunkt und einem Referenzpunkt des Kraftfahrzeuges. Ferner ermittelt das Datenverarbeitungsmittel mittels der zumindest zwei gemessenen Abstände den Ausrichtungswinkel $\alpha$ zwischen der Verfahrachse und der Verbindungslinie.

Weiterhin kann das Bilderfassungsmittel das Kraftfahrzeug bildlich erfassen. Das Datenverarbeitungsmittel kann den Ausrichtungswinkel $\alpha$ mittels Bildbearbeitung des erfassten Bildes ermitteln.

Das Verfahren ermöglicht, zeiteffizient eine sehr genaue, objektive und automatisierte Prüfung der lichttechnischen Einrichtung eines Kraftfahrzeuges durchzuführen.

Zusammenfassend hat die vorliegende Erfindung die Vorteile, dass eine schnelle und präzise Überprüfung und/oder Einstellung eines Kraftfahrzeugscheinwerfers ermöglicht wird. Ein Ausrichten der Prüfvorrichtung durch den Bediener mit Hilfsmitteln wie beispielsweise einem Laser, einem Schlitzkasten oder einem Spiegel ist bei der erfindungsgemäßen Prüfvorrichtung nicht notwendig. Die benötigte Prüfzeit wird somit reduziert. Die Prüfung bzw. deren Ergebnis ist sehr genau und objektiv.

Die Erfindung wird im Folgenden exemplarisch mit Bezug auf die beigefügten Zeichnungen beschrieben. Es zeigen

Figur 1 eine Ansicht einer erfindungsgemäßen Prüfvorrichtung,

Figur 2 eine Schnittansicht eines Gehäuses einer erfindungsgemäßen Prüfvorrichtung,

Figur 3 eine Ansicht einer erfindungsgemäßen Prüfvorrichtung, die vor einem Kraftfahrzeug angeordnet ist, und

Figur 4 eine Skizze zu einer beispielhaften Ermittlung und Korrektur des Ausrichtungswinkels $\alpha$.

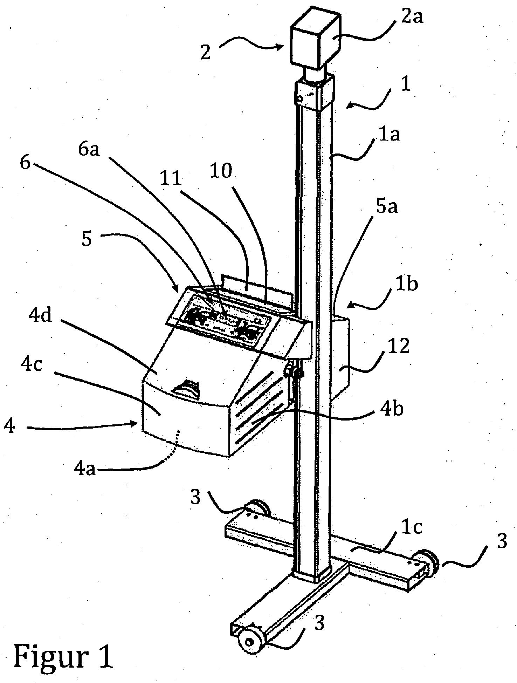

Figur 1 zeigt eine Prüfeinheit 1 mit Halteeinrichtung 1a, einem Gehäuse 1b und einem Fußabschnitt 1c. Das Gehäuse 1b ist vertikal verfahrbar an der Halteeinrichtung 1a montiert. Die Halteeinrichtung 1a steht auf dem Fußabschnitt 1c, der an einem bodenseitigen Endabschnitt der Halteeinrichtung 1a befestigt ist. Die Prüfeinheit 1 ist verfahrbar auf einem nicht gezeigten Führungsmittel gelagert.

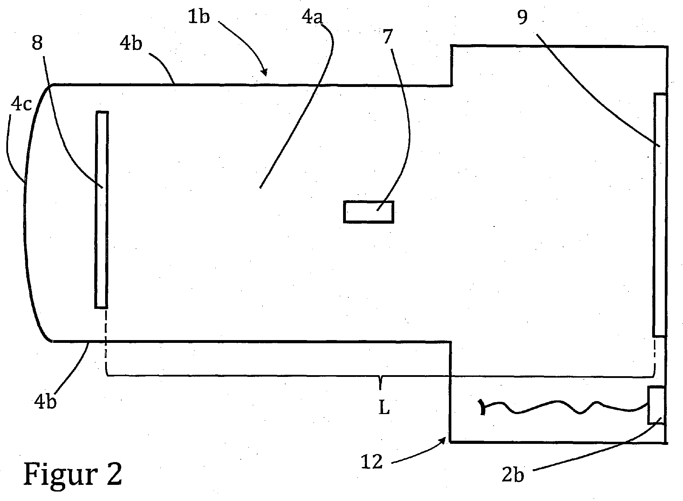

An der Prüfeinheit 1 ist ein Datenerfassungsmittel 2 montiert. Das Datenerfassungsmittel 2 ist in Figur 1 schematisch als Bilderfassungsmittel 2a gezeigt. Das Bilderfassungsmittel 2a kann u.a. z.B. ein Kamerasystem, ein Fotoapparat oder dergleichen sein. Ferner kann das Datenerfassungsmittel 2 ein Abstandsmessmittel 2b sein oder umfassen (s. Figur 2). Das Abstandsmessmittel 2b kann bevorzugt ein elektronischer Abstandssensor, z.B. basierend auf Infrarotlicht, Laserlicht, Schall, magnetischen Feldern und/oder elektrischen Feldern, sein.

Das Gehäuse 1b ist mit der Halteeinrichtung 1a derart verbunden, dass sie durch einen Bediener der Prüfvorrichtung vertikal entlang der Halteeinrichtung 1a nach oben oder unten verschoben werden kann. Dies ist über einen Seilzug realisiert, wobei an einem Ende eines Zugsseiles das Gehäuse 1b befestigt ist und an einem anderen Ende des Zugsseiles ein Gegengewicht. Das Zugseil wird an dem entgegengesetzten Ende des Fußabschnittes 1c über eine Umlenkrolle geleitet, so dass das Gegengewicht gewährleistet, dass das Gehäuse 1b an der gewählten vertikalen Position verbleibt. Das Zugseil, die Umlenkrolle und das Gegengewicht sind innerhalb der Halteeinrichtung 1a angeordnet. Alternativ können anstatt eines Zugseiles auch andere Mechanismen vorgesehen sein, z.B. eine Spindel, die entlang einer Gewindestange verläuft, ein Elektromotor z.B. in Kombination mit einem Seilzug oder eine Zahnstange, die in Eingriff mit einem Zahnabschnitt des Gehäuses 1b steht. Als Alternative zu dem Seil kann auch ein Band oder eine Kette vorgesehen sein.

Die Halteeinrichtung 1a hat im Wesentlichen die Form einer Hohlprofilstange, die durch Flachbleche gebildet wird. Die Flachbleche sind derart geformt, dass sie zusammengefügt das Stangenhohlprofil bilden. Eine Seitenfläche der Halteeinrichtung 1a weist einen Führungsschlitz auf. Durch diesen ist eine mechanische Verbindung zwischen Gehäuse 1b, das außerhalb der Halteeinrichtung 1a angeordnet ist, und beispielsweise dem Seilzug, der innerhalb des Hohlprofils der Halteeinrichtung 1a angeordnet ist, realisiert.

Der Fußabschnitt 1c wird wie in Figur 1 gezeigt durch zwei Flachprofile, die im Wesentlichen T-förmig zusammengefügt sind, gebildet. Der Fußabschnitt 1c ist dabei fest mit der Halteeinrichtung 1a verbunden. An dem Fußabschnitt 1c sind drehbar gelagert Rollen bzw. Räder 3 montiert, so dass die Prüfeinheit 1 leicht von einer Position zu einer anderen Position verfahren werden kann. Der Fußabschnitt 1c kann jedoch auch in jeder anderen Form ausgeführt sein, die das Aufrechtstehen der Halteeinrichtung 1a gewährleistet. Es können auch beliebig viele oder gar keine Rollen 3 vorgesehen sein.

Wie weiter aus Figur 1 ersichtlich wird das Gehäuse 1b von einem ersten Element 4 und einem zweiten Element 5 gebildet. Von einem Bodenabschnitt 4a des ersten Elementes 4 steht an den Längsseiten des Bodenabschnitts 4a jeweils eine Seitenwand 4b vertikal ab. An einer Querseite des Bodenabschnitts 4a steht eine Rückwand 4c rechtwinklig vom Bodenabschnitt 4a ab. Die Höhe der Seitenwände 4b ist auf halber Länge in ihrer Längsrichtung am größten. Zur vorderen und hinteren Querseite des Bodenabschnittes 4a fällt die Höhe der Seitenwände 4b jeweils ab. Ein erstes Deckenelement 4d verbindet die beiden Seitenwände 4b und die Rückwand 4c, wobei das erste Deckenelement 4d lediglich den Abschnitt zwischen der Rückwand 4c und dem höchsten Punkt der Seitenwände 4b verbindet.

Auf der der Rückwand 4c entgegengesetzten Seite des ersten Elementes 4 ist das winkelförmige zweite Element 5 angeordnet, das fest mit dem ersten Element 4 verbunden sein kann. Das zweite Element 5 weist zwischen der vorderen Querseite des ersten Elementes 4, den Seitenwänden 4b und dem ersten Deckenelement 4d ein zweites Deckenelement 5a auf.

Wie ferner aus Figur 1 ersichtlich hält ein parallel zum ersten Deckenelement 4d angeordneter Abschnitt des zweiten Elementes 5 ein Datenverarbeitungsmittel 6, das u.a. eine Steuerungselektronik mit Auswerte-, Korrektur- und Steuersoftware, eine Verfahreinheit, eine Datenschnittstelle für eine Datenübertragung per Kabel oder kabellos, ein Speichermittel, Bedienelemente, ein Hinweismittel und/oder ein Display 6a umfasst. Das Datenverarbeitungsmittel 6 kann u.a. Daten bzw. Signale des Bilderfassungsmittels 2a, des Abstandsmessmittels 2b, einer Kamera 7, eines Projektionsmittels 8 und/oder von weiteren Sensoren, z.B. Helligkeitssensoren oder einer Wegmesseinrichtung verarbeiten. Die Daten des Datenverarbeitungsmittels 6, z.B. Messdaten bzw. Prüfdaten, können beispielsweise über die Datenschnittstelle an einen externen Rechner übertragen werden.

Weiterhin hält das zweite Element 5 eine Linse 9 (s. Figur 2), die mit einem definierten Abstand L parallel zu dem Projektionsmittel 8 angeordnet ist. Die Linse 9 kann bevorzugt eine Fresnel-Linse sein. Es können jedoch auch andere Linsenformen oder mehrere Linsen, z. B. hintereinander angeordnet, vorgesehen sein, so dass ein Abbild eines Lichtstrahls z.B. verkleinert darstellbar ist.

An dem zweiten Deckenelement 5a kann zudem ein Sichtfenster 10 mit beispielsweise rechteckförmigem Querschnitt eingelassen sein. Das Sichtfenster 10 ermöglicht das Einsehen in das Innere des Gehäuses 1b von außen. Unterhalb des Sichtfensters 10, in Richtung entgegen der Rückwand 4c, kann ferner ein Klappspiegel 11 drehbar montiert sein. Ist der Klappspiegel 11 eingeklappt (Schließstellung), so ist das Sichtfenster 10 verschlossen bzw. verdeckt. Der Klappspiegel 11 kann zwischen der Schließstellung bei 0° und der vollständigen Öffnungsstellung bei 180° auf jeden Öffnungswinkel zwischen 0° und 180° eingestellt werden, so dass ein Bediener, der z. B. auf der Seite der Rückwand 4c des Gehäuses 1b steht, mittels des Klappspiegels 11 durch das Sichtfenster 10 in das Gehäuse 1b hineinschauen kann.

Das zweite Element 5 weist ferner einen Führungsabschnitt 12 auf, der die Halteeinrichtung 1a partiell umgreift. Dadurch wird eine exakte Führung des Gehäuses 1b vertikal entlang der Halteeinrichtung 1a ermöglicht.

Wie Figur 2 zeigt ist das Abstandsmessmittel 2b am Gehäuse 1b seitlich der Linse 9 angeordnet. Das Abstandsmessmittel 2b kann jedoch auch an einer anderen Position der Prüfeinheit 1 angeordnet sein. Die Prüfvorrichtung kann das Bilderfassungsmittel 2a und/oder das Abstandsmessmittel 2a aufweisen.

Wie Figur 2 weiterhin zeigt ist das Projektionsmittel 8 innerhalb des Gehäuses 1b zwischen der Rückwand 4c und der Linse 9 angeordnet. Das Projektionsmittel 8 kann beispielsweise eine Projektionsfläche sein oder ein CCD-Sensor bzw. aus mehreren CCD-Sensoren aufgebaut sein. Andere zweckdienliche Bildschirmtypen sind ebenfalls einsetzbar. Ist das Projektionsmittel 8 eine Projektionsfläche, so wird das nichtkorrigierte Abbild des Scheinwerferlichtstrahls, der von außerhalb des Gehäuses 1b durch die Linse 9 auf das Projektionsmittel 8 fällt, direkt darauf dargestellt. Dieses nichtkorrigierte Abbild des Scheinwerferlichtstrahls wird dann mittels der Kamera 7 bildlich erfasst, an das Datenverarbeitungsmittel 6 übermittelt, dort korrigiert und dann z.B. auf dem Display 6a korrigiert ausgegeben. Es kann auch lediglich eine Kontur des Lichtstrahlabbildes ausgegeben werden.

ist das Projektionsmittel 8 z.B. ein CCD-Sensor, so kann das vom CCD-Sensor erfasste Abbild des Lichtstrahls direkt, d.h. ohne Kameraerfassung, an das Datenverarbeitungsmittel 6 übermittelt werden und dort korrigiert werden. Das korrigierte Abbild kann dann auf dem CCD-Sensor und/oder dem Display 6a ausgegeben werden.

Das Projektionsmittel 8 kann zudem den Helligkeitssensor aufweisen, der die Lichtstärke des einfallenden Scheinwerferlichtstrahls misst. Dies ermöglicht, dass auch die Lichtstärke des Scheinwerfers geprüft werden kann.

Für eine Prüfung der Lichtstärke der lichttechnischen Einrichtung werden die Messwerte des Helligkeitssensors an das Datenverarbeitungsmittel 6 übermittelt und von der Lichtstärkeprüfeinrichtung mit Sollwerten verglichen. Weichen die Messwerte von den Sollwerten ab, so wird der Bediener der Prüfvorrichtung beispielsweise über das Display 6a informiert.

Ferner kann das Hinweismittel vorgesehen sein, um den Bediener der Prüfvorrichtung während des Einstellvorganges bzw. des Prüfvorganges des Scheinwerfers über eine Differenz zwischen Soll- und Istwert der Scheinwerfereinstellung zu informieren. Beispielsweise kann das Hinweismittel eine Lampe oder ein Lautsprecher sein. Ermittelt das Datenverarbeitungsmittel 6 eine Differenz zwischen Istwert und Sollwert, so kann das Hinweismittel einen Ton beziehungsweise ein Blinken mit einer Wiederholungsfrequenz ausgeben, die entsprechend der Differenz zwischen Soll- und Istwert hoch oder tief ist. Dadurch kann ein Bediener der Prüfvorrichtung beim Einstellen der Scheinwerfer des Kraftfahrzeuges ohne Sichtkontakt zur Prüfvorrichtung arbeiten. Selbstverständlich kann eine Abweichung auch am Display 6a angezeigt werden.

Die Prüfeinheit 1 kann automatisch verfahrbar sein, d.h. das Verfahren der Prüfeinheit 1 von einer Position auf eine andere kann beispielsweise durch die Verfahreinheit des Datenverarbeitungsmittels 6 ermöglicht werden. Dazu kann das Datenverarbeitungsmittel 6 auf Signale nicht gezeigter Neigungssensoren, Geschwindigkeitssensoren, Positionssensoren und/oder Beschleunigungssensoren zugreifen. Die Sensorsignale können in dem Datenverarbeitungsmittel 6 verarbeitet werden, um das selbsttätige Verfahren der Prüfeinheit 1 zu überwachen und zu steuern. Für ein automatisches Verfahren der Prüfeinheit 1 können zudem nicht gezeigte optische Systeme vorgesehen sein, die der Erkennung von Hindernissen im Fahrweg dienen können, und Fahrmotoren, die die Räder 3 antreiben. Durch eine autonome Energieeinheit, eine Batterie, ein Akkumulator oder eine Brennstoffzelle, kann die Prüfvorrichtung unabhängig von einem Stromkabel betrieben werden. Aus Sicherheitsgründen kann ein Schutzstoppschalter vorgesehen sein, der die Steuerung der Prüfvorrichtung durch das Datenverarbeitungsmittel 6 stoppt. Es kann auch vorgesehen sein, die Prüfeinheit 1 von einem Bediener beispielsweise über Funk mittels einer Fernbedienung zu verfahren bzw. zu bedienen.

Nicht dargestellt ist das Führungsmittel, mit dem der Fußabschnitt 1c bzw. die Rollen 3 in Eingriff stehen, so dass das Gehäuse 1b bzw. die Halteinrichtung 1a mit dem Gehäuse 1b horizontal geführt in dem Führungsmittel verschiebbar ist. Das Verschieben der Prüfeinheit 1 kann beispielsweise über nicht dargestellte Motoren erfolgen. Optional kann die Halteinrichtung 1a auch ohne Rollen 3 ausgeführt sein, so dass der Fußabschnitt 1c in direktem Eingriff mit dem Führungsmittel stehen kann, z.B. über eine Gleitlagerung.

An dem Führungsmittel kann ein Neigungserfassungsmittel, z. B. ein elektronischer Neigungssensor oder eine Libelle, montiert sein, das gewährleisten kann, dass das Führungsmittel absolut horizontal angeordnet ist. Die Daten eines elektronischen Neigungserfassungsmittels können von dem Datenverarbeitungsmittel 6 ausgewertet werden. So kann das Datenverarbeitungsmittel 6 dem Benutzer der Prüfvorrichtung eine Warnung, z.B. einen Warnton oder eine Anzeige im Display 6a ausgeben, wenn eine Abweichung des Führungsmittels von der Horizontalen erkannt wurde. Die Datenübertragung zum Datenverarbeitungsmittel 6 kann per Kabel oder kabellos, z.B. Funk oder Bluetooth, erfolgen. Selbstverständlich kann die Datenauswertung bzw. Korrekturrechnung auch von einem externen Rechner ausgeführt werden.

Außerdem kann das Führungsmittel mit höhenverstellbaren Beinen ausgerüstet sein, die manuell mechanisch oder elektrisch verfahren werden können. Somit lässt sich eine gewünschte Höhe der Prüfeinheit 1 auch oder zusätzlich über die höhenverstellbaren Beine einstellen. Das Führungsmittel kann fest mit dem Boden z.B. einer Werkstatthalle verbunden sein.

Das Führungsmittel kann ferner eine elektrische Einrichtung mit Stromführungselementen aufweisen, um elektrischen Strom von dem Führungsmittel auf die Prüfeinheit 1 mittels Kabel, Induktion oder Kontaktabgriff zu übertragen.

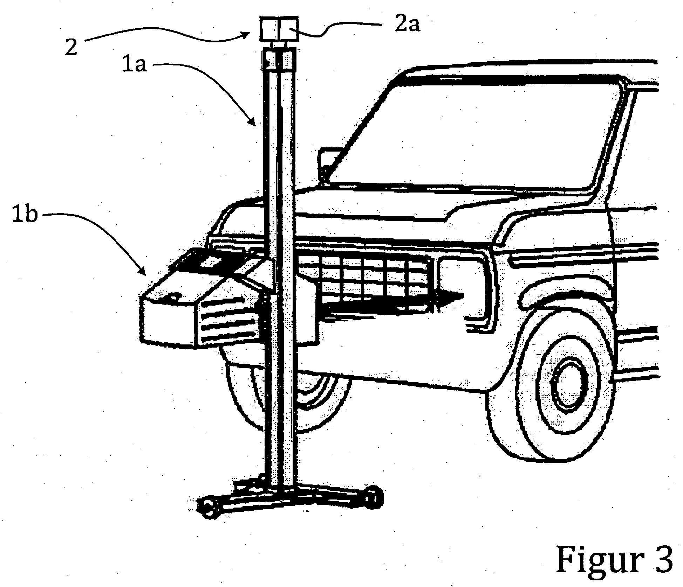

In Figur 3 ist beispielhaft die Positionierung der Prüfvorrichtung ohne das Führungsmittel vor einem Kraftfahrzeug dargestellt. Für die Überprüfung der Scheinwerfer wird die Linse 9 zwischen 1 cm und 1 m vor dem zu prüfenden Scheinwerfer positioniert, bevorzugt 10 bis 30 cm vor dem Scheinwerfer. Dabei wird die Prüfeinheit 1 derart vor dem zu prüfenden Scheinwerfer eines Kraftfahrzeuges positioniert, dass das Licht des eingeschalteten Scheinwerfers möglichst mittig durch die Linse 9 in das Gehäuse 1b der Prüfeinheit 1 und auf das Projektionsmittel 8 fällt. Ein Ausrichten der Prüfeinheit 1, das gewährleistet, dass die Prüfeinheit 1 bzw. die Linse 9 parallel zur Kraftfahrzeugquerachse bzw. zum Scheinwerfer positioniert ist, entfällt, da das Datenverarbeitungsmittel 6 eine nicht-parallele Ausrichtung automatisch korrigiert, wenn der Betrag eines Ausrichtungswinkel $\alpha$ größer ist als der Wert eines vorbestimmten Winkels $\alpha_{Grenz}$.

Gemäß einem Beispiel zur Ermittlung des Ausrichtungswinkels $\alpha$, das dem besseren Verständnis der Erfindung dient, wird mittels des Bilderfassungsmittels 2a ein Bild des Kraftfahrzeuges erfasst bzw. aufgenommen. Das Bild kann beispielsweise erfasst werden, wenn die Prüfeinheit 1 vor einem der Scheinwerfer positioniert ist.

Das erfasste Bild zeigt beispielsweise die Kühlerhaube des Kraftfahrzeuges von oben. Bei der automatischen Bildbearbeitung durch das Datenverarbeitungsmittel 6 werden beispielsweise markante Punkte des Kraftfahrzeuges z.B. entlang der Vorderkante selektiert. Die Selektion erfolgt automatisch durch das Datenverarbeitungsmittel 6. Dann werden beispielweise Abstände zwischen den selektierten Punkten und einer virtuell in das Bild eingefügten Basislinie aus dem Bild heraus berechnet. Die Basislinie wird dabei so in das Bild eingefügt, dass diese parallel zu einer Querachse des Kraftfahrzeuges liegt. Bevorzugt wird die Basislinie automatisch vom Datenverarbeitungsmittel 6 erzeugt.

Durch ein Vergleichen der Abstände zwischen der Basislinie und den selektierten Punkten ergibt sich der Ausrichtungswinkel $\alpha$. Beispielsweise dadurch, dass jeweils zwei Abstände miteinander verglichen werden, die selektierten Punkten zugeordnet sind, die symmetrisch rechts und links zu einer Längsachse des Kraftfahrzeuges liegen. Bevorzugt ist diese Längsachse eine Längssymmetrieachse des Kraftfahrzeuges. Stimmen beide Abstände überein, so ist der Ausrichtungswinkel $\alpha = 0$.

Es können auch mehrere Punkte bzw. Punktepaare bzw. deren Abstände zur Basislinie miteinander verglichen werden, so dass über eine Mittelung eventuelle Fehler, die z.B. durch unsymmetrische Stellen am Kraftfahrzeug hervorgerufen werden können, ausgeglichen werden.

Stimmen die Abstände rechts und links der Längssymmetrieachse nicht miteinander überein, so kann aus ihrer Differenz und ihrem Abstand zueinander der Ausrichtungswinkel $\alpha$ berechnet werden.

Das Datenverarbeitungsmittel 6 kann auch eine Interpolationsgerade durch die selektieren Punkte legen, deren Steigung ermittelt wird. Die Steigung gibt dann den Ausrichtungswinkel $\alpha$ an.

Weiterhin kann ein Raster auf dem (Werkstatt-)boden unter dem Kraftfahrzeug vorgesehen sein. Die Prüfvorrichtung oder die Prüfeinheit ist am Raster ausgerichtet positioniert. Bei der Bildaufnahme mittels des Bilderfassungsmittels 2a wird dieses Raster zusammen mit dem Kraftfahrzeug erfasst. Der Ausrichtungswinkel $\alpha$ ergibt sich dann aus den bekannten Abständen der jeweiligen Rasterlinien und der Relativposition zwischen Kraftfahrzeug und Raster oder z.B. Rasterpunkten.

Weitere Bildbearbeitungsalgorithmen können vorgesehen sein.

In einer erfindungsgemäßen Alternative wird der Ausrichtungswinkel $\alpha$ berechnet, indem die Prüfeinheit 1 bzw. die Prüfvorrichtung wie in Figur 3 gezeigt vor dem zu prüfenden Kraftfahrzeug positioniert wird bzw. das Kraftfahrzeug vor der Prüfvorrichtung. Die Prüfeinheit 1 wird dann von dem Führungsmittel geführt automatisch oder manuell entlang einer Verfahrachse 13, z.B. der Querachse der Prüfeinheit 1, verfahren.

Der Verfahrweg entlang der Verfahrachse 13 ist dabei mindestens so lang wie der minimale Weg zwischen zwei äußersten Messpunkten 14-1, 14-2. Bei z.B. zwei Messpunkten 14-1, 14-2 heißt das, dass der Weg mindestens so lang ist wie eine gerade Verbindung zwischen einem ersten und einem zweiten Messpunkt 14-1, 14-2 ist.

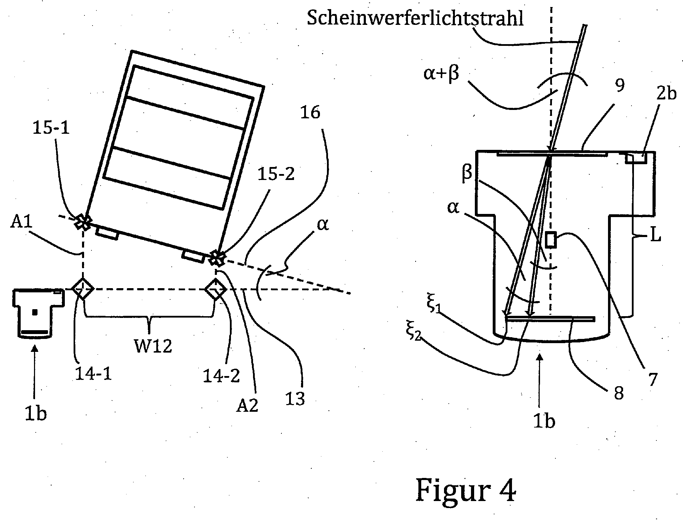

Wie Figur 4 zeigt sind die Messpunkte 14-1, 14-2 auf der Verfahrachse 13 beabstandet zueinander angeordnet. Bevorzugt werden zwei Messpunkte 14-1, 14-2 angefahren. Diese können besonders bevorzugt symmetrisch rechts und links zur Längsachse des Kraftfahrzeuges angeordnet sein.

Jedem Messpunkt 14-1, 14-2 ist jeweils ein Referenzpunkt 15-1, 15-2 am Kraftfahrzeug zugeordnet (s. Figur 4). Die Referenzpunkte 15-1, 15-2 werden entweder vor oder während der Prüfung durch den Bediener ausgewählt oder können vorprogrammiert in der Prüfvorrichtung gespeichert sein, z.B. je Fahrzeugtyp. Die Referenzpunkte 15-1, 15-2 können beispielsweise bei einer Prüfung der Frontscheinwerfer an jedem beliebigen Punkt der Vorderseite des Kraftfahrzeuges angeordnet sein. Beispielsweise können die Eckpunkte der Vorderkanten des Kraftfahrzeuges, die Scheinwerfer selbst oder ein Bereich des Kühlergrills als Referenzpunkte 15-1, 15-2 ausgewählt werden.

Die Eckpunkte der Vorderkante des Kraftfahrzeuges können beispielsweise dadurch automatisch erkannt werden, dass das Abstandsmessmittel 2b einen Abstandsprung erfasst, d.h. wenn die Prüfeinheit 1 entlang der gesamten Vorderseite des Kraftfahrzeuges verfahren wird, springen die gemessenen Abstände an den Seitenkanten jeweils von unendlichen Werten auf endliche Werte bzw. umgekehrt.

Bevorzugt sind die Referenzpunkte 15-1, 15-2 derart angeordnet, dass sie auf einer geraden Verbindungslinie 16 liegen. Besonders bevorzugt ist diese Verbindungslinie 16 parallel zur Querachse des Kraftfahrzeuges angeordnet (s. Figur 4). Ferner liegen die Referenzpunkte 15-1, 15-2 auf gleicher, beliebiger Höhe über dem (Werkstatt-)boden.

Während des Verfahrens der Prüfeinheit 1 entlang der Verfahrachse 13 werden mittels des Abstandsmessmittels 2b zumindest zwei Abstände A1, A2, bevorzugt die kürzesten, zwischen dem jeweiligem Messpunkt 14-1, 14-2 und dem zugehörigem Referenzpunkt 15-1, 15-2 ermittelt.

Dabei können die jeweils zueinandergehörigen Mess- und Referenzpunkte 14-1, 14-2, 15-1, 15-2 auf geraden Strecken liegen. Diese geraden Strecken sind bevorzugt senkrecht zur Verfahrachse 13 oder mit einem bekannten, konstanten Winkel zur Verfahrachse 13 angeordnet. Besonders bevorzugt sind diese geraden Strecken parallel zueinander angeordnet.

Die Wegstrecke W12 zwischen den Messpunkten 14-1, 14-2 entlang der Verfahrachse 13 der Prüfeinheit 1 ist bekannt, z.B. durch vorheriges Ausmessen, oder sie wird über die nicht gezeigte Wegmesseinrichtung der Prüfvorrichtung während des Verfahrens der Prüfeinheit 1 ermittelt. Bevorzugt wird der Vorgang des Verfahrens und Messens durch die Prüfvorrichtung selbsttätig ausgeführt.

Basierend auf der Anordnung der Wegstrecke W12 und den ermittelten Abständen A1, A2 wie beispielhaft in Figur 4 gezeigt kann das Datenverarbeitungsmittel 6 den Ausrichtungswinkel $\alpha$, der zwischen der Verfahrachse 13 und der Verbindungslinie 16 angeordnet ist, berechnen. Werden bevorzugt zwei Abstände A1, A2 von zwei Messpunkten 14-1, 14-2 aus ermittelt, ergibt sich der Ausrichtungswinkel $\alpha$ aus der Anordnung nach Figur 4 aus dem Quotienten der Differenz der Abstände $\Delta_{A1,A2}$ und der Wegstrecke W12:

$$\alpha = arctan\ (\Delta_{A1,A2}/W12)$$

Alternativ zur obigen Gleichung kann der Ausrichtungswinkel $\alpha$ auch berechnet werden, wenn eine Differenz der beiden Referenzpunkte 15-1, 15-2 entlang der Verbindungslinie 16 ermittelt wird. Dann ergibt sich der Ausrichtungswinkel $\alpha$ aus dem Arkussinus des Quotienten der Differenz der Abstände $\Delta_{A1,A2}$ und der Differenz zwischen den beiden Referenzpunkten 15-1, 15-2.

Ferner kann auch eine Mittelung verwendet werden, beispielsweise wenn mehr als zwei Messpunkte 14-1, 14-2 und mehr als zwei Abstände A1, A2 ermittelt werden. Dies kann beispielsweise derart erfolgen, dass Pärchen bestehend aus jeweils zwei Mess- und Referenzpunkten 14-1, 14-2, 15-1, 15-2, die bevorzugt symmetrisch rechts und links zu einer Längsmittelachse des Kraftfahrzeuges angeordnet sind, gebildet werden und zu jedem Pärchen ein Ausrichtungswinkel $\alpha$ berechnet wird. Die jeweiligen Ausrichtungswinkel $\alpha$ können dann gemittelt werden.

Weiterhin kann der Ausrichtungswinkel $\alpha$ auch ohne ein Verschieben/Verfahren der Prüfeinheit 1 ermittelt werden. Dazu kann die Prüfeinheit 1 einen Drehmotor aufweisen, der die Halteeinrichtung 1a, das Gehäuse 1b mit dem Abstandsmessmittel 2b oder lediglich das Abstandsmessmittel 2b um eine Drehachse drehen kann. Das Drehen kann z.B. über das Datenverarbeitungsmittel 6 kontrolliert werden. Dabei wird ein Drehwinkel $\gamma$ erfasst. Alternativ kann das Drehen auch ohne Drehmotor und zwar manuell erfolgen und der Drehwinkel y dann z.B. über mechanische Anschläge definiert sein.

Zum Ermitteln des Ausrichtungswinkels $\alpha$ durch Drehung der Prüfeinheit 1 wird die Prüfeinheit 1 vor dem Scheinwerfer des Kraftfahrzeuges positioniert und der erste Abstand A1 wird zwischen dem ersten Messpunkt 14-1 und dem ersten Referenzpunkt 15-1 erfasst. Dann wird die Prüfeinheit 1 oder das Gehäuse 1b oder das Abstandsmessmittel 2b um den vorgegebenen bzw. bekannten Drehwinkel y um die eigene Achse gedreht. Der Drehwinkel $\gamma$ ist bevorzugt relativ klein, z.B. 1° bis 10°. Nach der Drehung wird der zweite Abstand A2 von dem zweiten Messpunkt 14-2 aus, der hierbei Messpunkt 14-1 entspricht, zu dem zweiten Referenzpunkt 15-2 gemessen. Über einen trigonometrischen Zusammenhang lässt sich dann der Ausrichtungswinkel $\alpha$ mittels der Abstände A1, A2 und dem Drehwinkel $\gamma$ ermitteln.

Wenn der Ausrichtungswinkel $\alpha$ bestimmt ist, wird automatisch vom Datenverarbeitungsmittel 6 geprüft, ob dieser größer ist als der Betrag des vorbestimmten Winkels $\alpha_{Grenz}$. $\alpha_{Grenz}$ ist bevorzugt klein. Besonders bevorzugt ist $\alpha_{Grenz} = 0°$.

Wenn der Ausrichtungswinkel $\alpha$ größer ist als der Betrag von $\alpha_{Grenz}$, dann korrigiert das Datenverarbeitungsmittel 6 das Lichtstrahlabbild während der Überprüfung der Scheinwerfer basierend auf $\alpha$.

Für die Überprüfung der Scheinwerfer wird die Prüfeinheit 1 entlang der Verfahrachse 13 verschoben, um die Prüfeinheit 1 vor einem der zu prüfenden Scheinwerfer zu positionieren. Werden z.B. die Frontscheinwerfer eines herkömmlichen Kraftfahrzeuges mit zwei Frontscheinwerfern geprüft, so wird die Prüfeinheit 1 zunächst entlang der Verfahrachse 13 vor den ersten Frontscheinwerfer verfahren und dieser dann überprüft. Danach wird die Prüfeinheit 1 entlang der Verfahrachse 13 auf eine Position vor dem zweiten Frontscheinwerfer verschoben, um diesen zu überprüfen.

Die Korrektur des Lichtstrahlabbildes erfolgt beispielsweise mittels der folgenden Gleichungen

$$\xi_1 = L\ tan(\alpha + \beta)$$

$$\Rightarrow \quad \beta = arctan(\xi_1/L) - \alpha$$

$$\Rightarrow \quad \xi_2 = L\ tan(\beta).$$

In Figur 4 ist beispielhaft und skizzenhaft die Korrektur des Scheinwerferstrahlabbildes anhand eines Mittelpunktstrahls eines Scheinwerferstrahls gezeigt. Dabei ist "L" der gerätespezifische, kürzeste Abstand zwischen Linse 9 und Projektionsmittel 8, z.B. die Länge der Prüfeinheit 1. Der gezeigte Strahl trifft mit einem Winkel "$\alpha+\text{ß}$" auf die Linse 9 auf. Der Ausrichtungswinkel "$\alpha$" gibt die Ausrichtung der Prüfeinheit 1 zum Kraftfahrzeug bzw. zur Linse 9 an und der Winkel "ß" eine Abweichung des vom Scheinwerfer abgestrahlten Lichtstrahls zur Längsachse des Scheinwerfers. Der Scheinwerferstrahl trifft an einer Position "$\xi_1$" auf eine Abbildungsebene z.B. des Projektionsmittels 8. Mittels der obigen Korrekturgleichungen wird der Scheinwerferstrahl um den Ausrichtungswinkel "$\alpha$" korrigiert, so dass der korrigierte Strahl an der Position "$\xi_2$" angezeigt wird. Die Korrektur des Scheinwerferstrahls kann um Brechungseffekte und Linsenfehler erweitert werden. Selbstverständlich kann die Korrektur des Scheinwerferabbildes auch auf Basis anderer Gleichungen bzw. anderer Methoden erfolgen. Anhand des korrigierten Lichtstrahlabbildes wird dann die Prüfung der Scheinwerfer durchgeführt.

Das Merkmal, dass das Datenverarbeitungsmittel 6 zum Ermitteln des Ausrichtungswinkels $\alpha$ mittels der erfassten Daten und zum Korrigieren des Lichtabbildes basierend auf dem Ausrichtungswinkel $\alpha$ geeignet ist, kann auch eine Korrekturmethode umfassen, bei der der Ausrichtungswinkel $\alpha$ vom Datenverarbeitungsmittel 6 ermittelt wird und basierend auf dem ermittelten Ausrichtungswinkel $\alpha$ durch das Datenverarbeitungsmittels 6 der Drehmotor derart gesteuert wird, dass die Prüfeinheit 1 um den Ausrichtungswinkel $\alpha$ verdreht wird, so dass dieser korrigiert wird, d.h. $\alpha$ wird durch Verdrehung der Prüfeinheit auf ungefähr 0° eingestellt. Selbstverständlich kann anstatt der Verdrehung durch den Drehmotor auch eine manuelle Verdrehung vorgesehen sein. Dazu kann beispielsweise das Datenverarbeitungsmittel 6 oder das Display 6a den Ausrichtungswinkel $\alpha$ anzeigen, so dass ein Bediener der Prüfvorrichtung die Prüfeinheit um den Ausrichtungswinkel $\alpha$ korrigieren kann.

Durch die Korrektur des Lichtstrahlabbildes um den Ausrichtungswinkel $\alpha$ wird der Scheinwerferstrahl korrekt auf dem Projektionsmittel 8 dargestellt. Somit ist die Prüfung des Scheinwerfers jederzeit objektiv und äußerst genau, ohne dass ein zeitintensives Ausrichten der Prüfvorrichtung zum Scheinwerfer notwendig ist. Eine Fehleinstellung des Scheinwerfers, Winkel ß $\neq$ 0, kann somit schnell und einfach erkannt und behoben werden.

Zusammengefasst umfasst die Erfindung die folgenden Aspekte:

Ein erster Aspekt betrifft eine Prüfvorrichtung zur Überprüfung lichttechnischer Einrichtungen eines Kraftfahrzeuges mit einer Prüfeinheit 1, die zur Positionierung vor zumindest einer lichttechnischen Einrichtung entlang einer Verfahrachse 13 verschiebbar ist, wobei das von der lichttechnischen Einrichtung abgestrahlte Licht mittels einer Linse 9 auf einem Projektionsmittel 8 abgebildet wird und dort ein Lichtabbild erzeugt, einem Datenerfassungsmittel 2 zum Erfassen von Daten, die dazu geeignet sind, einen Ausrichtungswinkel $\alpha$ zwischen der Verfahrachse 13 und einer Querachse des Kraftfahrzeuges zu ermitteln, und einem Datenverarbeitungsmittel 6 zum Ermitteln des Ausrichtungswinkels $\alpha$ mittels der erfassten Daten und zum Korrigieren des Lichtabbildes basierend auf dem Ausrichtungswinkel $\alpha$, wobei das Korrigieren erfolgt, wenn der Ausrichtungswinkel $\alpha$ größer ist als ein vorbestimmter Winkel $\alpha_{Grenz}$, und die Überprüfung der lichttechnischen Einrichtung basierend auf dem korrigierten Lichtabbild erfolgt.

Das Datenerfassungsmittel 2 umfasst ein mit der Prüfeinheit 1 in Verbindung stehendes Abstandsmessmittel 2b zum Messen zumindest zweier Abstände A1, A2, jeweils zwischen einem Messpunkt 14-1, 14-2 und einem Referenzpunkt 15-1, 15-2 des Kraftfahrzeuges. Das Datenverarbeitungsmittel 6 ermittelt mittels der zumindest zwei gemessenen Abstände A1, A2 den Ausrichtungswinkel $\alpha$ zwischen der Verfahrachse 13 und einer Verbindungslinie 16, die die zumindest zwei Referenzpunkten 15-1, 15-2 verbindet. Das Abstandsmessmittel 2b ist an der Prüfeinheit 1 angeordnet.

Gemäß einem zweiten Aspekt der Prüfvorrichtung nach dem ersten Aspekt kann der Abstand A1, A2 jeweils entlang einer geraden Strecke zwischen einem Messpunkt 14-1, 14-2 und einem Referenzpunkt 15-1, 15-2 messbar sein, wobei ein erster Abstand A1 entlang einer ersten geraden Strecke zwischen einem ersten Messpunkt 14-1 und einem ersten Referenzpunkt 15-1 gemessen werden kann und ein zweiter Abstand A2 entlang einer zweiten geraden Strecke zwischen einem zweiten Messpunkt 14-2 und einem zweiten Referenzpunkt 14-2, und die erste gerade Strecke und die zweite gerade Strecke beabstandet und parallel zueinander angeordnet sein können.

Gemäß einem dritten Aspekt der Prüfvorrichtung nach zumindest einem von dem ersten und zweiten Aspekt können die zumindest zwei Referenzpunkte 15-1, 15-2 am Kraftfahrzeug paarweise symmetrisch rechts und links zur Mittellängsachse des Kraftfahrzeuges angeordnet sein und/oder die zumindest zwei Referenzpunkte (15-1, 15-2) auf gleicher Höhe des Kraftfahrzeuges angeordnet sein.

Gemäß einem vierten Aspekt der Prüfvorrichtung nach zumindest einem der vorangegangenen Aspekte kann eine Wegmesseinrichtung vorgesehen sein, die eine kürzeste Wegstrecke W12 zwischen den zumindest zwei Messpunkten 14-1, 14-2 entlang der Verfahrachse 13 der Prüfeinheit 1 erfassen kann.

Gemäß einem fünften Aspekt der Prüfvorrichtung nach zumindest einem der vorangegangenen Aspekte kann eine Verfahreinrichtung vorgesehen sein, die das selbstständigen Verfahren der Prüfvorrichtung auf eine Zielposition ermöglicht, wobei die Verfahreinrichtung Steuerroutinen, die in dem Datenverarbeitungsmittel 6 angeordnet sein können, einen Motor, der zumindest ein Rad 3 antreiben kann, und Sensoren umfassen kann.

Gemäß einem sechsten Aspekt der Prüfvorrichtung nach zumindest einem der vorangegangenen Aspekte kann ein Führungsmittel vorgesehen sein, das die Prüfvorrichtung horizontal verfahrbar führen kann.

Gemäß einem siebten Aspekt der Prüfvorrichtung nach dem sechsten Aspekt können an dem Führungsmittel höhenverstellbare Beine und/oder Neigungserfassungsmittel angeordnet sein.

Gemäß einem achten Aspekt der Prüfvorrichtung nach dem siebten Aspekt kann ein Hinweismittel eine Warnung ausgeben oder das Führungsmittel automatisch in die Horizontale verfahren bzw. justiert werden, wenn das Neigungserfassungsmittel eine Abweichung des Führungsmittels von der Horizontalen erfasst.

Ein weiterer Aspekt umfasst ein Verfahren zur Prüfung und/oder zum Einstellen einer lichttechnischen Einrichtung eines Kraftfahrzeuges mit einer Prüfvorrichtung gemäß zumindest einem der Aspekte 1 bis 8, wobei die Prüfeinheit 1 vor der lichttechnischen Einrichtung des Kraftfahrzeuges positioniert wird, das Datenerfassungsmittel 2 Daten erfasst, die dazu geeignet sind, den Ausrichtungswinkel $\alpha$ zu ermitteln, das Datenverarbeitungsmittel 6 den Ausrichtungswinkel $\alpha$ mittels der erfassten Daten ermittelt, das Datenverarbeitungsmittel 6 das Lichtabbild basierend auf dem Ausrichtungswinkel $\alpha$ korrigiert, wenn der Ausrichtungswinkel $\alpha$ größer ist als der vorbestimmte Winkel $\alpha_{Grenz}$, und die Überprüfung der lichttechnischen Einrichtung basierend auf dem korrigierten Lichtabbild durchgeführt wird.

Ein weiterer Aspekt des Verfahrens umfasst, dass die Prüfeinheit 1 vor dem Kraftfahrzeug entlang der Verfahrachse 13 verfahren wird und das Abstandsmessmittel 2b dabei zumindest zwei Abstände A1, A2 misst, jeweils zwischen einem Messpunkt 14-1, 14-2 und einem Referenzpunkt 15-1, 15-2 des Kraftfahrzeuges, und das Datenverarbeitungsmittel 6 mittels der zumindest zwei gemessenen Abstände A1, A2 den Ausrichtungswinkel $\alpha$ zwischen der Verfahrachse 13 und der Verbindungslinie 16 ermittelt.

Die beschriebenen Alternativen und Weiterentwicklungen können soweit für den Fachmann ausführbar beliebig miteinander kombiniert werden.

| | |
|---|---|
| 1 | Prüfeinheit |
| 1a | Halteeinrichtung |
| 1b | Gehäuse |
| 1c | Fußabschnitt |
| 2 | Datenerfassungsmittel |
| 2a | Bilderfassungsmittel |
| 2b | Abstandsmessmittel |
| 3 | Rad/Rolle |
| 4 | Erstes Element |
| 4a | Bodenabschnitt |
| 4b | Seitenwand |
| 4c | Rückwand |
| 4d | Erstes Deckenelement |
| 5 | Zweites Element |
| 5a | Zweites Deckenelement |
| 6 | Datenverarbeitungsmittel |
| 6a | Display |
| 7 | Kamera |
| 8 | Projektionsmittel |
| 9 | Linse |
| 10 | Sichtfenster |
| 11 | Klappspiegel |
| 12 | Führungsabschnitt |
| 13 | Verfahrachse |
| 14-1, 14-2 | Messpunkt(e) |
| 15-1, 15-2 | Referenzpunkt(e) |
| 16 | Verbindungslinie |
| A1, A2 | Abstände |
| W12 | Wegstrecke |

**Patentansprüche**

1. Prüfvorrichtung zur Überprüfung lichttechnischer Einrichtungen eines Kraftfahrzeuges mit

- einer Prüfeinheit (1), die zur Positionierung vor zumindest einer lichttechnischen Einrichtung entlang einer Verfahrachse (13) verschiebbar ist, wobei das von der lichttechnischen Einrichtung abgestrahlte Licht mittels einer Linse (9) auf einem Projektionsmittel (8) abgebildet wird und dort ein Lichtabbild erzeugt,

- einem Datenerfassungsmittel (2) zum Erfassen von Daten die dazu geeignet sind, einen Ausrichtungswinkel $\alpha$ zwischen der Verfahrachse (13) und einer Querachse des Kraftfahrzeuges zu ermitteln, und

- einem Datenverarbeitungsmittel (6) zum Ermitteln des Ausrichtungswinkels $\alpha$ mittels der erfassten Daten und zum Korrigieren des Lichtabbildes basierend auf dem Ausrichtungswinkel $\alpha$, wobei

das Korrigieren erfolgt, wenn der Ausrichtungswinkel $\alpha$ größer ist als ein vorbestimmter Winkel $\alpha_{Grenz}$, und

die Überprüfung der lichttechnischen Einrichtung basierend auf dem korrigierten Lichtabbild erfolgt, wobei

das Datenerfassungsmittel (2) ein mit der Prüfeinheit (1) in Verbindung stehendes Abstandsmessmittel (2b) zum Messen zumindest zweier Abstände (A1, A2), jeweils zwischen einem Messpunkt (14-1, 14-2) und einem Referenzpunkt (15-1, 15-2) des Kraftfahrzeuges, umfasst,

**gekennzeichnet dadurch, dass** das Abstandsmessmittel (2b) an der Prüfeinheit (1) angeordnet ist und das Datenverarbeitungsmittel (6) mittels der zumindest zwei gemessenen Abstände (A1, A2) den Ausrichtungswinkel α zwischen der Verfahrachse (13) und einer Verbindungslinie (16), die die zumindest zwei Referenzpunkten (15-1, 15-2) verbindet, ermittelt.

2. Prüfvorrichtung nach Patentanspruch 1, **gekennzeichnet dadurch, dass** der Abstand (A1, A2) jeweils entlang einer geraden Strecke zwischen einem Messpunkt (14-1, 14-2) und einem Referenzpunkt (15-1, 15-2) messbar ist, wobei
ein erster Abstand (A1) entlang einer ersten geraden Strecke zwischen einem ersten Messpunkt (14-1) und einem ersten Referenzpunkt (15-1) gemessen wird und ein zweiter Abstand (A2) entlang einer zweiten geraden Strecke zwischen einem zweiten Messpunkt (14-2) und einem zweiten Referenzpunkt (14-2), und
die erste gerade Strecke und die zweite gerade Strecke beabstandet und parallel zueinander angeordnet sind.

3. Prüfvorrichtung nach zumindest einem der Patentansprüche 1 und 2, **gekennzeichnet dadurch, dass** die zumindest zwei Referenzpunkte (15-1, 15-2) am Kraftfahrzeug paarweise symmetrisch rechts und links zur Mittellängsachse des Kraftfahrzeuges angeordnet sind und/oder die zumindest zwei Referenzpunkte (15-1, 15-2) auf gleicher Höhe des Kraftfahrzeuges angeordnet sind.

4. Prüfvorrichtung nach zumindest einem der vorangegangenen Patentansprüche, **gekennzeichnet durch** eine Wegmesseinrichtung, die eine kürzeste Wegstrecke (W12) zwischen den zumindest zwei Messpunkten (14-1, 14-2) entlang der Verfahrachse (13) der Prüfeinheit (1) erfasst.

5. Prüfvorrichtung nach zumindest einem der vorangegangenen Patentansprüche, **gekennzeichnet durch** eine Verfahreinrichtung, die das selbstständigen Verfahren der Prüfvorrichtung auf eine Zielposition ermöglicht, wobei die Verfahreinrichtung Steuerroutinen, die in dem Datenverarbeitungsmittel (6) angeordnet sind, einen Motor, der zumindest ein Rad (3) antreibt, und Sensoren umfasst.

6. Prüfvorrichtung nach zumindest einem der vorangegangenen Patentansprüche, **gekennzeichnet durch** ein Führungsmittel, das die Prüfvorrichtung horizontal verfahrbar führt.

7. Prüfvorrichtung nach Patentanspruch 6, **gekennzeichnet dadurch, dass** an dem Führungsmittel höhenverstellbare Beine und/oder Neigungserfassungsmittel angeordnet sind.

8. Prüfvorrichtung nach Patentanspruch 7, **gekennzeichnet dadurch, dass** ein Hinweismittel eine Warnung ausgibt oder das Führungsmittel automatisch in die Horizontale verfahren bzw. justiert wird, wenn das Neigungserfassungsmittel eine Abweichung des Führungsmittels von der Horizontalen erfasst.

9. Verfahren zur Prüfung und/oder zum Einstellen einer lichttechnischen Einrichtung eines Kraftfahrzeuges mit einer Prüfvorrichtung gemäß zumindest einem der Patentansprüche 1-8, wobei

   - die Prüfeinheit (1) vor der lichttechnischen Einrichtung des Kraftfahrzeuges positioniert wird,
   - das Datenerfassungsmittel (2) Daten erfasst, die dazu geeignet sind, den Ausrichtungswinkel α zu ermitteln,
   - das Datenverarbeitungsmittel (6) den Ausrichtungswinkel α mittels der erfassten Daten ermittelt,
   - das Datenverarbeitungsmittel (6) das Lichtabbild basierend auf dem Ausrichtungswinkel α korrigiert, wenn der Ausrichtungswinkel α größer ist als der vorbestimmten Winkel $α_{Grenz}$, und die Überprüfung der lichttechnischen Einrichtung basierend auf dem korrigierten Lichtabbild durchgeführt wird,
   **gekennzeichnet dadurch, dass** die Prüfeinheit (1) vor dem Kraftfahrzeug entlang einer Verfahrachse (13) verfahren wird und das Abstandsmessmittel (2b) dabei
   - zumindest zwei Abstände (A1, A2) misst, jeweils zwischen einem Messpunkt (14-1, 14-2) und einem Referenzpunkt (15-1, 15-2) des Kraftfahrzeuges, und
   - das Datenverarbeitungsmittel (6) mittels der zumindest zwei gemessenen Abstände (A1, A2) den Ausrichtungswinkel α zwischen der Verfahrachse (13) und der Verbindungslinie (16) ermittelt.

**Claims**

1. A test device for testing lighting means of a motor vehicle comprising

   - a test unit (1) displaceable along an axis of displacement (13) for positioning in front of at least one lighting means, wherein
   the light radiated by said lighting means is imaged on a projection means (8) by means of a lens (9) and generates a light image there,
   - a data acquisition means (2) for acquiring data suitable to determine an angle of orientation α between said axis of displacement (13) and a transverse axis of said motor vehicle, and
   - a data processing means (6) for determining said angle of orientation α by means of the acquired data and for correcting the light image based on said angle of orientation $\alpha$, wherein said data acquisition means (2) comprises a distance measuring means (2b) being in connection with said test unit (1) for measuring at least two distances (A1, A2) each between a measuring point (14-1, 14-2) and a reference point (15-1, 15-2) of said motor vehicle, **characterized in that** said distance measuring means (2b) is disposed at said test unit (1) and said data processing means (6) determines said angle of orientation $\alpha$ between said axis of displacement (13) and said connecting line (16) connecting said at least two reference points (15-1, 15-2) by means of said at least two measured distances (A1, A2).

2. The test device according to claim 1, **characterized in that** the distance (A1, A2) is measurable along a straight path between a measuring point (14-1, 14-2) and a reference point (15-1, 15-2), respectively, wherein
a first distance (A1) is measured along a first straight path between a first measuring point (14-1) and a first reference point (15-1) and a second distance (A2) is measured along a second straight path between a second measuring point (14-2) and a second reference point (14-2), and
said first straight path and said second straight path are spaced and arranged in parallel to each other.

3. The test device according to at least one of the claims 1 and 2, **characterized in that** said at least two reference points (15-1, 15-2) are arranged, at said motor vehicle, symmetrically in pairs to the left and right of the longitudinal center axis of said motor vehicle and/or said at least two reference points (15-1, 15-2) are arranged on the same height of said motor vehicle.

4. The test device according to at least one of the preceding claims, **characterized by** a displacement measuring device detecting a shortest displacement distance (W12) between said at least two measuring points (14-1, 14-2) along said axis of displacement (13) of said test unit (1).

5. The test device according to at least one of the preceding claims, **characterized by** a displacement means allowing the autonomous displacement of said test device to a target position, wherein said displacement means includes control routines arranged in said data processing means (6), a motor driving at least one wheel (3) and sensors.

6. The test device according to at least one of the preceding claims, **characterized by** a guiding means guiding said test device in horizontally displaceable manner.

7. The test device according to claim 6, **characterized in that** legs adjustable in height and/or inclination acquisition means are disposed on said guiding means.

8. The test device according to claim 7, **characterized in that** an indicating means outputs a warning or said guiding means is automatically displaced or adjusted into the horizontal if said inclination acquisition means acquires $\alpha$ deviation of said guiding means from the horizontal.

9. A method for testing and/or for adjusting a lighting means of a motor vehicle with a test device according to at least one of claims 1-8, wherein

- said test unit (1) is positioned in front of said lighting means of said motor vehicle,
- said data acquisition means (2) acquires data suitable to determine said angle of orientation $\alpha$,
- said data processing means (6) determines said angle of orientation $\alpha$ by means of the acquired data,
- said data processing means (6) corrects the light image based on said angle of orientation $\alpha$, if said angle of orientation $\alpha$ is greater than said predetermined angle $\alpha_{limit}$, and
the test of said lighting means is performed based on the corrected light image,
**characterized in that** said test unit (1) is displaced along said axis of displacement (13) in front of said motor vehicle, wherein said distance measuring means (2b)
- measures at least two distances (A1, A2) each between a measuring point (14-1, 14-2) and a reference point (15-1, 15-2) of said motor vehicle, and
- said data processing means (6) determines said angle of orientation $\alpha$ between said axis of displacement (13) and said connecting line (16) by means of said at least two measured distances (A1, A2).

**Revendications**

1. Dispositif de vérification de moyens d'éclairage d'un véhicule automobile, comportant

- un ensemble de vérification (1) qui est déplaçable en translation le long d'un axe de déplacement (13) afin de le positionner devant au moins un moyen d'éclairage, dans lequel
la lumière émise par le moyen d'éclairage est représentée sur un moyen de projection (8) par l'intermédiaire d'une lentille (9) pour y générer une image lumineuse,
- un moyen de saisie de données (2) pour saisir des données, qui est apte à déterminer un angle d'orientation α entre l'axe de déplacement (13) et un axe transversal du véhicule automobile, et
- un moyen de traitement de données (6) pour déterminer l'angle d'orientation α au moyen des données saisies et pour corriger l'image lumineuse à la base de l'angle d'orientation α, dans lequel la correction a lieu si l'angle d'orientation α est supérieur à un angle prédéterminé α<sub>Grenz</sub>, et
la vérification du moyen d'éclairage s'effectue à la base de l'image lumineuse corrigée,
le moyen de saisie de données (2) comprenant un moyen de mesure de distance (2b) relié à l'ensemble de vérification (1) et destiné à mesurer au moins deux distances (A1, A2) respectives entre un point de mesure (14-1, 14-2) et un point de référence (15-1, 15-2) du véhicule automobile, **caractérisé en ce que**
le moyen de mesure de distance (2b) est agencé sur l'ensemble de vérification (1), et au moyen desdites au moins deux distances mesurées (A1, A2), le moyen de traitement de données (6) détermine l'angle d'orientation α entre l'axe de déplacement (13) et une ligne de liaison (16) qui relie lesdits au moins deux points de référence (15-1, 15-2).

2. Dispositif de vérification selon la revendication 1, **caractérisé en ce que** la distance (A1, A2) est mesurable le long d'un trajet rectiligne respectif entre un point de mesure (14-1, 14-2) et un point de référence (15-1, 15-2), dans lequel
une première distance (A1) est mesurée le long d'un premier trajet rectiligne entre un premier point de mesure (14-1) et un premier point de référence (15-1), et une seconde distance (A2) est mesurée le long d'un second trajet rectiligne entre une second point de mesure (14-2) et un second point de référence (14-2), et
le premier trajet rectiligne et le second trajet rectiligne sont agencés à distance l'un de l'autre et parallèlement l'un à l'autre.

3. Dispositif de vérification selon l'une au moins des revendications 1 et 2, **caractérisé en ce que** lesdits au moins deux points de référence (15-1, 15-2) sont agencés sur le véhicule automobile par paire symétriquement à droite et à gauche de l'axe longitudinal médian du véhicule automobile et/ou lesdits au moins deux points de référence (15-1, 15-2) sont agencés à la même hauteur du véhicule automobile.

4. Dispositif de vérification selon l'une au moins des revendications précédentes, **caractérisé par** un moyen de mesure de trajet qui détecte le trajet le plus court (W12) entre lesdits au moins deux points de mesure (14-1, 14-2) le long de l'axe de déplacement (13) de l'ensemble de vérification (1).

5. Dispositif de vérification selon l'une au moins des revendications précédentes, **caractérisé par** un moyen de déplacement qui permet le déplacement autonome du dispositif de vérification vers une position cible, le moyen de déplacement comprenant des routines de commande qui sont agencées dans le moyen de traitement de données (6), un moteur qui entraîne au moins une roue (3), et des capteurs.

6. Dispositif de vérification selon l'une au moins des revendications précédentes, **caractérisé par** un moyen de guidage qui guide le dispositif de vérification en déplacement horizontal.

7. Dispositif de vérification selon la revendication 6, **caractérisé en ce que** des jambes et/ou des moyen de détection d'inclinaison réglables en hauteur sont agencés sur le moyen de guidage.

8. Dispositif de vérification selon la revendication 7, **caractérisé en ce qu'**un moyen d'avertissement émet un avertissement ou le moyen de guidage est déplacé ou ajusté automatiquement dans l'horizontale si le moyen de détection d'inclinaison détecte un écart du moyen de guidage par rapport à l'horizontale.

9. Procédé de vérification et/ou de réglage d'un moyen d'éclairage d'un véhicule automobile comportant un dispositif de vérification selon l'une au moins des revendications 1 à 8, dans lequel

- on positionne l'ensemble de vérification (1) devant le moyen d'éclairage du véhicule automobile,
- le moyen de détection de données (2) saisit des données qui conviennent pour déterminer l'angle d'orientation α,
- le moyen de traitement de données (6) détermine l'angle d'orientation α au moyen des données saisies,
- le moyen de traitement de données (6) corrige l'image lumineuse à la base de l'angle d'orientation α si l'angle d'orientation α est supérieur à l'angle prédéterminé α<sub>Grenz</sub>, et
on effectue la vérification du moyen d'éclairage à la base de l'image lumineuse corrigée, **caractérisé en ce que** l'on déplace l'ensemble de vérification (1) devant le véhicule automobile le long d'un axe de déplacement (13), et le moyen de mesure de distance (2b)
- mesure au moins deux distances (A1, A2) respectives entre un point de mesure (14-1, 14-2) et un point de référence (15-1, 15-2) du véhicule automobile, et

- le moyen de traitement de données (6) détermine l'angle d'orientation α entre l'axe de déplacement (13) et la ligne de liaison (16) au moyen des deux distances mesurées (A1, A2).

Figur 1

Figur 2

Figur 3

Scheinwerferlichtstrahl

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19932294 A1
- DE 19941034 A1